# EUROPEAN PATENT APPLICATION

(11) **EP 1 045 177 A1**
(43) Date of publication of application: **18.10.2000**
(21) Application number: 99125948.2
(22) Date of filing: 27.12.1999
(51) Int. Cl.: F16J 15/44, F04D 29/16

(54) **Centrifugal pump**

(30) Priority: 13.04.1999 DE 19916370
(71) Applicant: IVECO MAGIRUS AG, D-89079 Ulm (DE)
(72) Inventor: Krämer, Manfred, 06132 Halle/S. (DE); Pape, Hans-Henning, 06132 Halle/S. (DE)
(74) Representative: Cerbaro, Elena, Dr.

(57) **Abstract**

A centrifugal pump, in particular a fire pump, comprises at least one impeller (12) as well as sealing rings (54, 56) for sealing radial sealing gaps between the impeller (12) and the pump casing (16). The sealing rings (54, 56) consist of a plastics material and are mounted in the casing (16) with a snap connection (74, 80).

## Description

The invention relates to a centrifugal pump, in particular a fire pump, with at least one impeller as well as sealing rings for sealing radial sealing gaps between the impeller and the pump casing.

Fire pumps represent an example of centrifugal pumps which are subject to a relatively high degree of wear. Extinguishing water is very often pumped out of pools, rivers or lakes to the scene of a fire or into an extinguishing agent tank by means of fire pumps. In such cases gravel, sand and small stones may be taken in with the water and pass into the pump. The wear which this causes also affects the tightness of the pump against leakage losses and so-called internal circulating flows.

Various solutions have so far been employed in order to seal radial sealing gaps of a gap width of, e.g. 0.1 - 0.3 mm. Wear may occur either at the casing and/or at the impeller. A significant factor in this respect is the pairing of materials in the sealing gaps. If the impeller becomes worn, either it must be replaced or the sealing region must be reworked. Both solutions are relatively uncomplicated. However wear of the casing entails far more complicated reworking, as the pump has to be dismantled completely for machining to be carried out, it is very difficult to observe the necessary tolerances and the subsequent insertion of sealing elements requires additional expenditure. It is for these reasons that special sealing rings which, as wearing parts, can easily be replaced, are often used in centrifugal pumps. Hence angle rings in the sealing gaps have also proved successful precisely for fire pumps which in some cases have to deliver dirty water.

For example, it is known to use aluminium angle rings which are screwed to stationary components of the pump, for instance the pump casing, the intake cover or the impeller. The structural throttle gap between the rotating impeller and the opposite stationary construction member should be maintained for as long as possible. The sealing region at the impeller may be particularly abrasion-resistant if it is provided with a ceramic coating. Therefore wear basically only occurs at the aluminium angle rings. Although the pump has to be dismantled in order to replace the worn angle rings, complicated reworking of the casing parts is not necessary where the represented embodiment is concerned.

The object of the invention is to provide a centrifugal pump which is well sealed against leakage losses and circulating flows and enables the seals in the radial sealing gaps between the impeller and the casing to be renewed relatively easily, inexpensively and quickly.

This object is solved according to the invention by a centrifugal pump of the above type, which is characterised in that the sealing rings consist of a plastics material and can be mounted in the casing with a snap connection.

The sealing rings can thus be mounted very easily and with relatively low costs when wear occurs. Tools need not be used. As the sealing rings are plastics parts, it is relatively easy to destroy them and remove them from their seat when they are worn.

This seat is preferably formed by a circulating seating face, lying on the radially outer side of the sealing rings, in the casing.

In order to form the snap or locking connection, a circulating groove is provided in the seating faces, for example, while the sealing rings have a corresponding circulating rib on the radially outer side. The edge of this rib which leads during mounting and, optionally, also the leading edge of the sealing ring, may be bevelled backwards to facilitate mounting. A peripheral flange projecting radially outwards is preferably located on the side which is at the rear when the ring is pressed in, which flange either lies from outside of the seating face against the corresponding casing part or enters a groove formed at the periphery of the seating face. This peripheral flange guarantees accurate axial positioning of the sealing rings.

The sealing rings preferably consist of polypropylene or polyethylene. They may be plastics parts with embedded glass beads or glass fibres. The sealing rings may be produced by injection moulding.

Preferred embodiments of the invention are explained in detail in the following on the basis of the accompanying drawings.
Figure 1 is a longitudinal section through a centrifugal pump according to the invention;
Figure 2 is an enlarged partial section of the region of a radial sealing gap between the pump casing and an impeller;
Figure 3 is a further enlarged partial section to illustrate a sealing ring according to the invention.

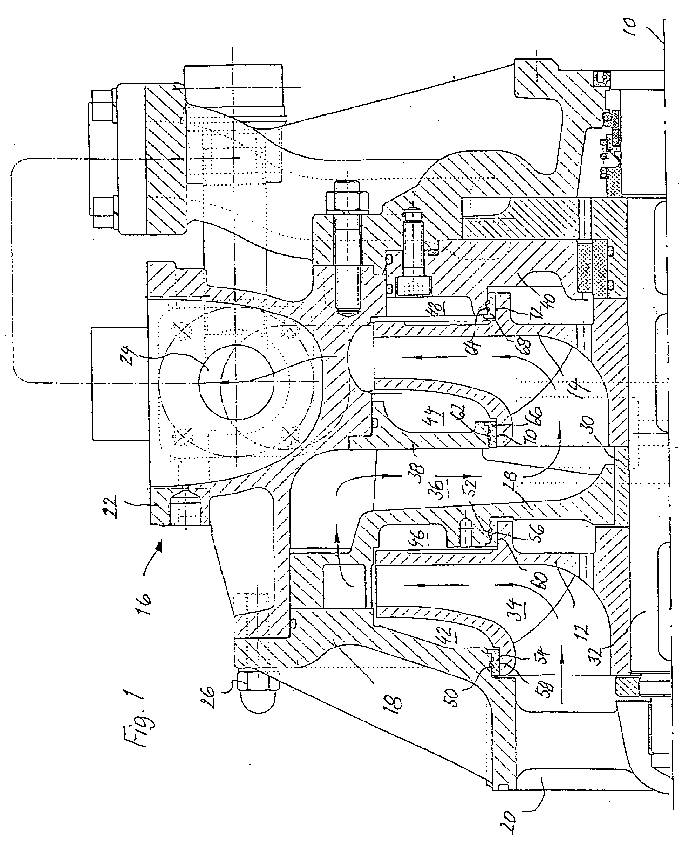

Figure 1 is a longitudinal section through a fire pump which, as such, is basically known. The representation is restricted to the upper part above the longitudinal axis 10, as the lower part is to some extent a mirror image and to some extent of no relevance to the description of the present invention. This is a two-stage pump with two impellers 12, 14 which take in the extinguishing agent axially and discharge it radially according to the arrows shown in Figure 1.

The impellers are located in a casing which is designated as a whole by 16 and is composed of a plurality of casing parts. A first casing part 18 is located on the left-hand side in Figure 1 and forms the inlet 20. A second casing part 22 is represented in the upper region of Figure 1 and forms the upper end of the pump as well as the outlet 24. The first and the second casing parts 18, 22 are connected by means of paraxial screws 26. The first and the second casing parts 18, 22 define the interior space of the pump on the left-hand and the upper side and, starting from the upper left-hand corner of the interior space, accommodate a third casing part 28, which extends inside the casing up to a bush 30, which surrounds the pump shaft, the latter being designated by 32. The first casing part 18 and the third casing part 28 define a rotationally symmetrical interior space 34, in which the first impeller 12 rotates.

This impeller 12 delivers the extinguishing agent according to the represented arrows radially outwards and through a radially outer opening, which is not represented, in the third casing part 28 into a passage 36, which in turn is directed radially inwards. As a whole this passage 36 is defined at the top by the second casing part 22, on the left-hand side in Figure 1 by the third casing part 28 and on the right-hand side by a further, inner casing part, the fourth casing part 38.

In the radially inner region the extinguishing agent passes in turn from the passage 36 in the axial direction into the second impeller 14, through which the extinguishing agent is delivered outwards to the outlet 24. The second impeller 14 runs in an interior space which is defined by the upper, second casing part 22, on the left-hand side the fourth casing part 38 and on the right-hand side a further inner casing part, the fifth casing part 40.

Since sand, small stones or other solids may be taken up when extinguishing water is pumped out of rivers or fire-extinguishing pools or in similar applications, it is impossible to seal the impellers at their radially outer periphery with a tight fit with respect to the casing, as this could lead to high wear levels or even destroy the pump. Figure 1 therefore shows that there is a distinct gap at the transition between the circumference of the impellers 12, 14 and the corresponding mating piece of the casing, here of the third and the first casing part 28, 22. This gap could result in a considerable proportion of the extinguishing agent escaping and flowing back and then being taken in through the corresponding impeller again. This would give rise to circulating flows and significantly reduce the efficiency of the pump.

So-called lateral impeller spaces 42, 44 and 46, 48, which in turn are sealed, are therefore created on both sides of the impellers between these and the casing. Extinguishing agent can thus flow back into the lateral impeller spaces 42, 44, 46, 48 through the gaps between the circulating periphery of the impellers and the casing, although only in a quantity which is determined by the size of these lateral impeller spaces, so that the extinguishing agent retained here prevents further circulating losses of extinguishing agent.

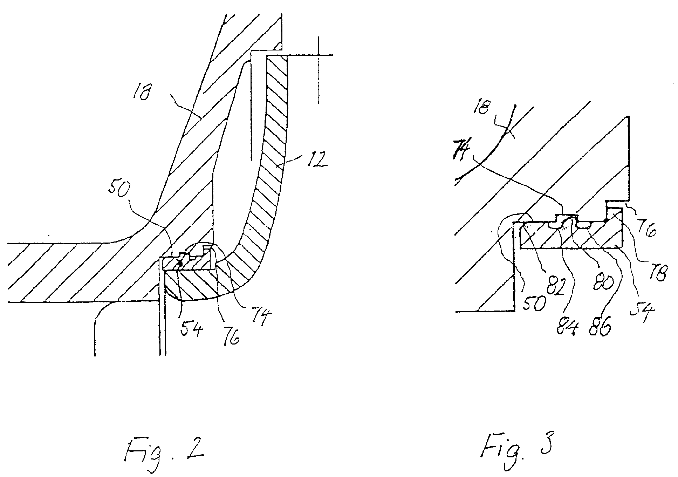

The lateral impeller spaces are sealed against a return flow of extinguishing agent opposite to the delivery direction. For this purpose circulating seal seats 50, 52 are formed in the first casing part 18 and in the third casing part 28 on the side which in each case faces the first impeller 12, which seats represent faces which circulate in annular fashion, are turned radially inwards and to which sealing rings 54, 56 may be secured. These sealing rings 54, 56 are represented more precisely in Figures 2 and 3, so that they may subsequently be explained in detail with respect to their geometry.

On their radially inner side the sealing rings lie closely opposite a circulating mating face 58, 60, which is turned radially outwards, at both axial end regions of the first impeller 12.

Seats 62, 64, which are likewise turned radially inwards, and on which sealing rings 66, 68 lie, are located on both sides of the second impeller 14 at the fourth casing part 38 and the fifth casing part 40, which sealing rings lie opposite mating faces 70, 72, in turn directed radially outwards, in the axial end regions of the second impeller 14.

The four sealing rings 54, 56 and 66, 68 lie on one and the same circumferential surface in relation to the longitudinal axis 10 of the pump and therefore have the same diameter, so that the same sealing rings may be used in all four cases to simplify the manufacturing process.

Further details of the mounting of the pump shaft 32 are shown in the right-hand part of Figure 1, which also shows at the top a high-pressure connection which may be required although which does not play a part here in representing the invention and shall not therefore be explained in detail.

On the other hand, further details of the sealing rings and their seats shall be represented on the basis of Figures 2 and 3.

Figure 2 is basically an enlarged partial section of the region around the sealing ring 54, which is provided on the left at the first impeller 12 in Figure 1, between the first casing part 18 and the impeller 12. The seat 50 of this sealing ring has a circulating groove 74. A groove 76 is also provided at the open side, which is turned to the right, of the seat 50.

At its periphery which lies towards the open side of the seat 50 the sealing ring 54 has a circulating, outward directed peripheral flange 78, which enters the groove 76.

A rib 80, which is directed radially outwards, is also provided in the longitudinal central region of the sealing ring 54 and enters the groove 74 in the longitudinal central region of the seat 50. The rib 80 is bevelled at the outer edge on the left-hand side in Figures 2 and 3, i.e. in the direction into the seat 50. A further bevel 82 is located at the top left-hand edge of the actual sealing ring 54. Shallow, circulating grooves 84, 86 are formed in the radially outer circumferential face of the sealing ring 54 on both sides of the rib 80.

The sealing ring can be pressed from the right to the left in Figures 2 and 3 into the seat 50 more easily due to the two bevels at the actual sealing ring and the rib 80. The plastics material is quite capable of allowing the necessary deformation of the sealing ring to take place. Moreover, the rib 80 is given a certain additional flexibility by the two grooves 84, 86 on both sides of the rib 80.

In this respect the two bevels at the rib and at the sealing ring make it easier to press in the latter, although there are no corresponding slopes which would simplify the withdrawal process. The sealing ring is therefore held so as to be axially secure. When worn, however, the sealing ring can be deformed or even destroyed relatively easily, so that it can be removed.

The peripheral flange 78 on the axial outside of the sealing ring enables pressure to be applied when the ring is mounted without any risk of the latter being damaged.

A further function of the peripheral flange 78 is to define, together with the groove 76, the exact axial position of the sealing ring.

Furthermore, the elastic deformability of the sealing ring ensures that this can be fitted in the seal seat with an adequate preloading force, so that it cannot turn at the same time. It is, however, also possible to additionally provide an anti-twist mechanism between the seat and the sealing ring, e.g. in the form of an axially extending rib on one face and a corresponding groove in the other.

Other plastics materials in addition to the above-mentioned materials polyethylene and polypropylene may also be used to produce the sealing rings. For example, reinforced or non-reinforced polyvinylene oxide or polyvinylene sulphide are also possibilities.

The solution according to the invention enables the following advantages, inter alia, to be achieved:
1) Simple and inexpensive sealing ring production by injection moulding.
2) Highly accurate sealing rings without additional reworking.
3) The rings can easily be mounted by pressing them in.
4) The sealing rings are fixed by a disposable snap connection.
5) Simple replacement of rings by destruction, withdrawal and insertion of a new sealing ring.
6) The wear occurs at the sealing ring in all cases, so that it is not necessary to apply a high-quality coating to the impellers, which consist of metal, in order to increase the hardness of the impeller surface.

## Claims

1. Centrifugal pump, in particular a fire pump, with at least one impeller (12, 14) as well as sealing rings (54, 56, 66, 68) for sealing radial sealing gaps between the impeller (12, 14) and the pump casing (16), characterised in that the sealing rings (54, 56, 66, 68) consist of a plastics material and are mounted in the casing (16) with a snap connection (74, 80).

2. Centrifugal pump according to Claim 1, characterised in that the sealing rings (54, 56, 66, 68) are mounted at circulating seating faces (50, 52, 62, 64) of the casing (16) and lie opposite corresponding mating faces of the impeller (12, 14) of the radially outer side.

3. Centrifugal pump according to Claim 2, characterised in that at least one circulating groove (74) is provided in the seating faces (50, 52, 62, 64), and that the sealing rings (54, 55, 66, 68) have at least one circulating rib (80) on the radially outer circumferential face.

4. Centrifugal pump according to Claim 3, characterised in that the rib (80) is bevelled at the edge which leads when the rings are pressed into the seat (50, 52, 62, 64) formed by the seating face.

5. Centrifugal pump according to Claim 4, characterised in that circulating, outward projecting peripheral flanges (78) are provided on the sealing rings (54, 56, 66, 68) at the peripheries which are at the rear when these rings lock into the seats.

6. Centrifugal pump according to Claim 5, characterised in that circulating grooves (76) are provided in the seats at the entrance thereof to accommodate the peripheral flanges (78) of the sealing rings.

7. Centrifugal pump according to any one of the preceding Claims, characterised in that a bevel (82) is provided on the sealing rings on the radially outer side at the periphery which leads when the rings are pressed into the mounted position.

8. Centrifugal pump according to any one of Claims 3 to 7, characterised in that circulating grooves (84, 86) are provided in the outer face of the sealing rings on both sides of the rib (80) on the outer circumferential face of the sealing rings (54, 56, 66, 68).

9. Centrifugal pump according to any one of the preceding Claims, characterised in that an anti-twist mechanism is provided to retain the sealing rings (54, 56, 66, 68) in their casing seat.

10. Centrifugal pump according to any one of the preceding Claims, characterised in that the sealing rings (54, 56, 66, 68) consist of polyethylene or polypropylene.

11. Centrifugal pump according to any one of the preceding Claims, characterised in that the sealing rings consist of a plastics material with a glass bead or glass fibre constituent.

12. Centrifugal pump according to any one of the preceding Claims, characterised in that the sealing rings are injection moulded parts.
